# EUROPEAN PATENT APPLICATION

(11) **EP 2 290 333 A1**
(43) Date of publication of application: **02.03.2011**
(21) Application number: 09425330.9
(22) Date of filing: 25.08.2009
(51) Int. Cl.: G01F 23/00, G01F 23/26, B01D 17/02

(54) **Fuel tank for stationary use and method for the detection of excess water in the fuel contained in said tank**

(71) Applicant: Ascot S.R.L., 93012 Gela (CL) (IT)
(72) Inventor: Greca, Luigi, 93012 Gela (CL) (IT)
(74) Representative: Botti, Mario

(57) **Abstract**

A fuel tank (1) for stationary applications, being advantageously arranged to detect the presence of an excess of water in the fuel contained therein, defining therewithin a main fuel containment chamber (2) on whose bottom a sump pit (3) is opened; said fuel tank comprises sensor means (4) suitable to detect the presence of water within said sump pit (3).

## Description

### Field of application

The present invention relates, in its more general aspect, to a fuel tank intended for stationary applications.

The invention also relates to a method for detecting an excess of water in the fuel contained within said tank.

Such a tank and method are specifically applied to feed thermal engines, and particularly internal-combustion engines, belonging to generator sets.

### Prior art

In the current state of the art, generator sets are used for a variety of stationary applications, both of civil and military nature, mainly in areas being remote, uncomfortable or for other reasons not being served by power supply networks, where it is however necessary to feed machines or plants.

These generator sets must necessarily comprise, besides the electric generator and the engine associated thereto generally an alternator and a high-power diesel engine - a fuel tank - gas oil for example - characterised by a considerable capacity and by excellent mechanical and chemical resistance qualities. Fuel, supplied by means of tank trucks or mobile tanks of different type, generally contains very small quantities of water as well as various types of impurities (sludge).

On the other hand, the water in the fuel must never exceed certain limits; in fact an excess thereof can cause the internal- combustion engine to shut down, as well as irreversibly damage it.

In normal operating conditions, the periodic filter replacement and routine maintenance and control operations allow the presence of water within the tank to be monitored. On the contrary, when the generator set is placed in areas being hard to reach, the limited machine accessibility can produce dangerous accumulations.

For the above-mentioned reasons, there is a growing need in this field to be able to evaluate in an effective and timely way if the quantity of water contained in a fuel tank exceeds or not a prudential threshold level.

The technical problem underlying the present invention is thus to provide a tank for stationary applications allowing the operations for controlling the presence of water in the fuel contained therein to be automated, as well as a method for performing said tank control operations.

### Summary of the invention

This technical problem is solved by a fuel tank for stationary applications, defining therewithin a main fuel containment chamber on whose bottom a sump pit is opened.

The tank also comprises sensor means suitable to detect the presence of water in said sump pit.

When water is present in the hydrocarbon mixture, the latter will tend, because of the higher specific weight thereof, to remain on the tank bottom filling the sump pit. Due to sensor means, the nature of the liquid being in said pit can thus be evaluated, reaching the aim fixed by the invention.

The tank can also comprise pumping means associated to the sump pit and arranged to suck the liquid contained therein.

In this way, the important advantage is reached to allow the excess of water to be immediately removed when being detected by sensor means.

Moreover, pumping means also allow the sludges depositing on the tank bottom to be at least partially removed, avoiding the use of drains on the tank bottom and the negative ecological impact produced by the use thereof.

Said pumping means can comprise a discharge pump, being external or not with respect to the tank. In particular, if this pump is external, pumping means also comprise a suction duct keeping the pump in fluid connection with the sump pit inside.

Sensor means can be of various types, provided that they allow water to be distinguished from fuel. For example, a capacitive sensor can be used, being arranged within said sump pit.

In particular, since the sump pit is a channel extending between two opposite ends, the capacitive sensor can comprise two opposite electrodes in correspondence with said ends.

It must be noted that, in a particularly advantageous embodiment of the invention, said channel extends crosswise and for a prevalent portion of the length with respect to a tank longitudinal development direction.

The main containment chamber and the sump pit can be defined by a tank monolithic structure, being for example thermoformed by centrifugation and made of polypropylene.

Since it is monolithic and thus without welded joints, this structure has the advantage of preventing possible fuel leaks into the environment.

Moreover this monolithic structure can be housed in a frame, made of steel or other material having good mechanical resistance properties, having a containment and support function.

The tank can advantageously comprise an alarm system, of the optical, acoustical or other type, associated to sensor means and arranged to alert at the presence of water in the tank.

Said technical problem is also solved by a method for detecting an excess of water being mixed with liquid fuel, comprising the following steps;
- inserting a liquid fuel into a tank for stationary applications, said tank comprising a main containment chamber and a sump pit opening on said chamber bottom;
- detecting, through sensor means, the possible presence of water within said sump pit;
- sending an alarm signal in case said sensor means detect the presence of water within said sump pit.

This method can further comprise the step of sucking the liquid within the sump pit in case sensor means detect the presence of water within the pit itself. This suction step can be suitably stopped when sensor means do not detect the presence of water any more in the sump pit.

Further features and advantages of the tank and method according to the present invention will be apparent from the following description of a preferred embodiment given by way of non-limiting example with reference to the attached drawings.

### Brief description of the drawings

Figure 1 is a perspective view of a fuel tank according to the present invention;

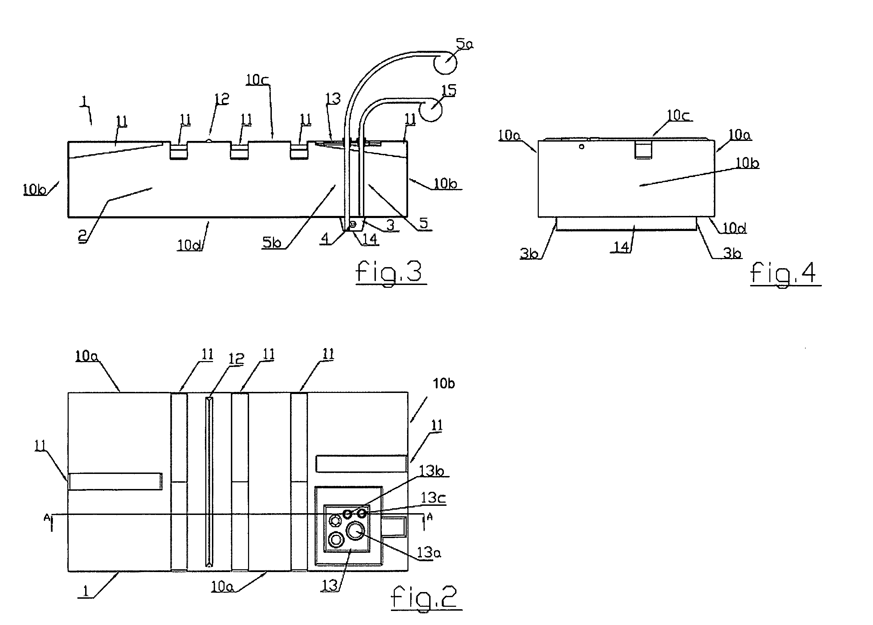

Figure 2 is a view from above of the fuel tank according to figure 1;
Figure 3 is a front view, being cross-sectioned according to the plane A-A indicated in figure 2, of the fuel tank of figure 1;
Figure 4 is a side view of the fuel tank according to figure 1;
Figure 5 is a perspective view of an internal detail of the fuel tank of figure 1;

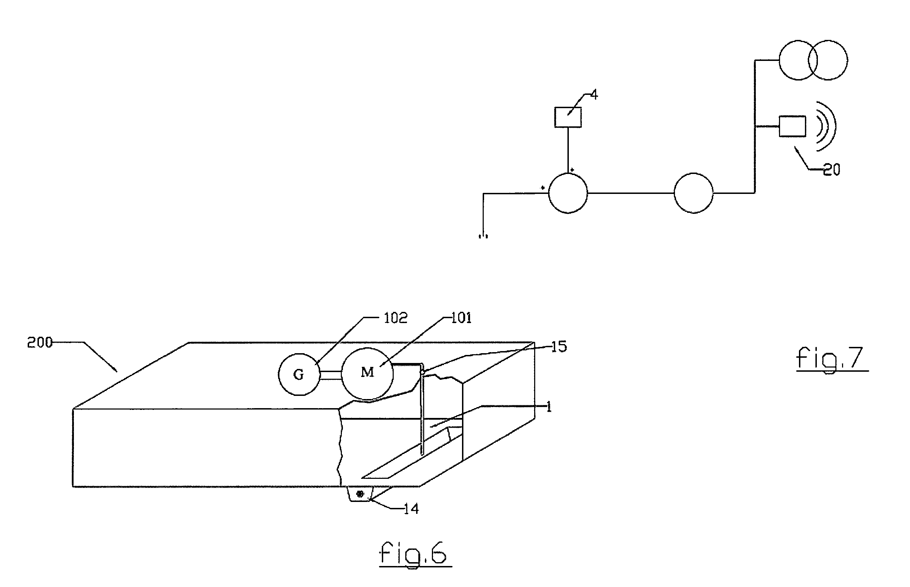

Figure 6 is a schematic view of a generator set comprising the fuel tank of figure 1;
Figure 7 is an operation diagram of an alarm circuit associated to the fuel tank of figure 1.

### Detailed description

With reference to the attached drawings, the fuel tank for stationary applications according to the present invention is generally indicated with 1. In particular, this tank 1 is arranged to belong to a large-size fixed generator set 200.

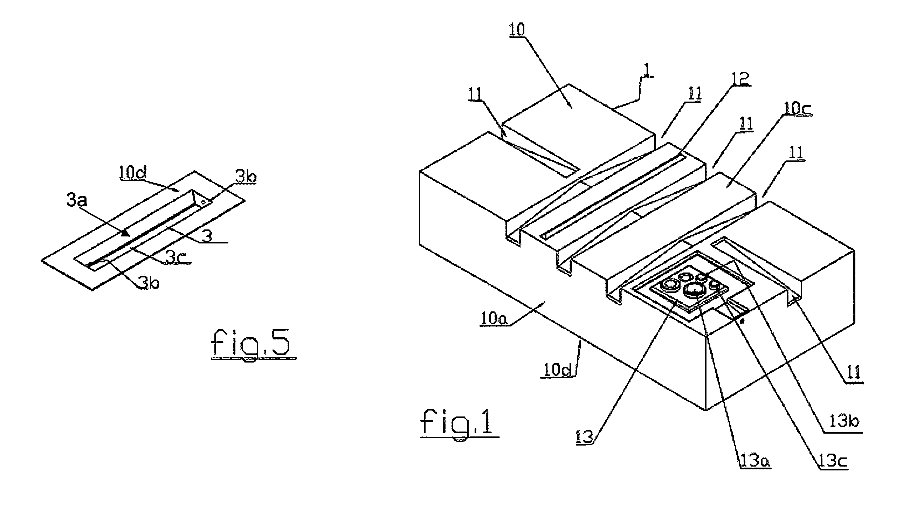

The tank is shown in figure 1, arranged according to a normal operating configuration; hereafter in the present description, the relative and absolute positions and orientations of the various elements composing the device, being defined by terms like upper and lower, above and below, horizontal and vertical or other similar terms, are always to be interpreted with reference to this configuration.

The tank 1 is a monolithic structure 10 made of polypropylene. In particular, it is thermoformed by centrifugation.

This monolithic structure 10 comprises longitudinal 10a and transversal 10b side walls, being all vertical, besides a bottom wall 10d and an upper wall 10c, being horizontal. These walls 10a, 10b, 10c, 10d define therewithin a main fuel containment chamber 2.

In the embodiment being described, walls 10a, 10b, 10c, 10d are, except for some unevenness being described hereafter, substantially plane and rectangle-shaped. The monolithic structure 10 thus takes a substantially parallelepipedic shape.

The base size of the monolithic structure 10 in the shown embodiment is about one meter by two meters; the structure height is instead half a meter, for a total capacity of tank 1 reaching 1,000 litres. Of course, these dimensions are provides by simple way of example and they can vary according to specific requirements, for example an alternative embodiment to the one being shown is one meter high, for a total capacity of 2,000 litres.

In the operating configuration, the monolithic structure 10 is housed in a steel frame performing a containment action on side walls 10a, 10b, in order to avoid their deformation because of the pressure of the fuel contained within the tank 1. The frame also provides a bearing base for the monolithic structure, so that the bottom wall 10d does not rest directly on the ground. Moreover, the frame supports the other elements composing the generator set 200, such as an internal combustion engine 101 and an alternator 102, which are placed above the tank 1.

The fuel contained in the main containment chamber 2 of the tank 1 is sucked by means of a fuel pump 15 of the internal combustion engine 101 of the generator set 200.

The upper wall 10c has some sloping channels 11 whose function is to avoid liquid accumulation (leaks coming from machines standing above the tank 1, or meteoric waters in case of insufficient generator set covering) on the upper surface of the monolithic structure 10. A further function of sloping channels 11 is to stiffen the monolithic structure 10, avoiding deformations due to the static loads acting thereon.

The tank 1 comprises three transversal two-pitch sloping channels 11, and two longitudinal one-pitch sloping channels 11 arranged in correspondence with the two opposite ends of the monolithic structure 10.

The upper wall 11c has also a transversal, projecting and triangle-sectioned stiffening rib 12.

In correspondence with one of the vertex thereof, a connection panel 13 is obtained on the upper wall 11c, having a plurality of access holes to the main containment chamber 2. These access holes are arranged to allow fuel and possible control, measure and pumping instruments to be inserted and extracted.

Said access holes comprise a main filler 13a, a discharge connection 13b and an engine fuel supply connection 13c, The remaining access holes can be used for example to associate automatic filling means of the tank 1 or to insert a fuel level mechanical sensor.

The bottom wall 11d of the monolithic structure 10 has instead a projection 14, extending crosswise to the tank 1 with a trapezoidal section, tapering towards the bottom.

It must be noted that the projection 14 does not extend up to the longitudinal edges being opposite to the bottom wall 11d, stopping anyway at a close distance from them. It must also be noted that the projection is arranged near one of the transversal edges of this bottom wall, i.e. sideways with respect to the horizontal extension of the thank 1. In particular, the projection 14 is arranged below the connection panel 13.

Within the tank 1, a sump pit 3 corresponds to the projection 14, whose function is disclosed hereafter. This sump pit thus opens on the bottom of the main containment chamber 2 wherein fuel is stored.

The pit 3 is conformed like a channel extending crosswise with respect to the prevalent longitudinal dimension of the monolithic structure 10, between two opposite trapezoidal ends 3b. It communicates with the main containment chamber 2 by means of a rectangular opening 3a, and it tapers towards an always rectangular bottom 3c starting from the latter.

It must be noted that the sump pit dimensions 3 are relatively small with respect to the main containment chamber 2 ones. For example, in the here-described specific embodiment, the sump pit 3 capacity is equal to about 1% of the main containment chamber capacity.

By virtue of their lower specific weight, water and sludge being in the fuel accumulate in the sump pit 3.

The tank 1 comprises sensor means 4 for water detection arranged in correspondence with said sump pit 3. Through these sensor means 4, it is thus possible to monitor the presence of water within the sump pit 3, and consequently within the whole tank 1.

In the here-described embodiment, sensor means 4 are realized by a capacitive sensor whose electrodes are arranged at the two opposite ends of the sump pit 3, or even at one of these ends and at a water/sludge bailing pipe. Since water conductive properties are considerably different from the ones of the hydrocarbons used as a fuel, the capacitive sensor is capable to detect the undesirable presence of water in correspondence with the level of the electrodes thereof.

An alarm system 20 of the acoustical, optical or other type is suitably connected to sensor means 4.

Moreover, pumping means 5 are provided, comprising a discharge pump 5a and a suction duct 5b, comprising the above-described water/sludge bailing pipe, passing through the discharge opening 13a and opening inside the sump pit 3. The discharge pump 5a, when operating, sucks the water and possible sludges being on the bottom of the sump pit 3.

It must be noted that a suction pipe connected to the engine fuel pump 15 is instead arranged to suck the fuel starting from a raised position with respect to the sump pit 3, in order to prevent water and sludges to be accidentally sucked.

A method for detecting an excess of water in the fuel container in the tank 1 according to the present invention is described hereafter.

This method provides a preliminary step of inserting the fuel, obviously in a liquid form, into the tank 1. Thus, after a suitable collection time, the possible presence of water in the sump pit 3 is detected through the above-described sensor means. In case water is detected, an alarm signal is sent by means of the above-mentioned alarm system 20.

Pumping means 5 can be manually or automatically activated when sensor means 4 detect the presence of water, and deactivated when said sensor means do not detect such a presence any more. In this way the whole volume of water on the tank bottom is sucked out by the discharge pump 5a.

Obviously, with the aim of meeting contingent and specific requirements, a person skilled in the art will be able to bring several changes and variations to the above-described tank and method, all falling within the scope of protection of the invention as defined by the following claims.

## Claims

1. A fuel tank (1) for stationary applications, defining therewithin a main fuel containment chamber (2), **charaterised in that** on the bottom of said main containment chamber (2) a sump pit (3) is opened and in that said fuel tank comprises sensor means (4) suitable to detect the presence of water within said sump pit (3).

2. A tank according to claim 1, also comprising pumping means (5) associated to the sump pit (4) and arranged to suck the liquid contained therein.

3. A tank according to claim 2, wherein said pumping means (5) comprise a discharge pump (5a) being external to the tank and a suction duct (5b) connecting said discharge pump (5a) to the sump pit (3) inside.

4. A tank according to one of the previous claims, comprising a suction pipe connected to an engine fuel pump (15) arranged to suck the fuel contained within the tank starting from a raised position with respect to the sump pit (3).

5. A tank according to one of the previous claims, wherein said sensor means (4) comprise a capacitive sensor arranged in correspondence with said sump pit (3).

6. A tank according to any of the previous claims, wherein the sump pit (3) is a channel extending between two ends (3b),

7. A tank according to claim 6, wherein said channel extends crosswise and for a prevalent portion of the length with respect to a tank (1) longitudinal development direction.

8. A tank according to claim 6 when depending on claim 5, wherein said capacitive sensor comprises two electrodes arranged at the opposite ends (3b) of the channel defined by the sump pit (3).

9. A tank according to claim 6 when depending on claim 5, wherein said capacitive sensor comprises two electrodes, the first one being arranged on one of the ends (3b) of the channel defined by the sump pit (3), the second one being arranged on a water/sludge bailing pipe.

10. A tank according to one of the previous claims, wherein said main containment chamber (2) and said sump pit (3) are defined by a monolithic structure (10) of the tank (1).

11. A tank according to claim 10, wherein said monolithic structure (10) is made of polypropylene.

12. A tank according to one of the previous claims, comprising an alarm system (20) associated to sensor means (4).

13. A method for detecting an excess of water in a liquid fuel, comprising the following steps:
- inserting a liquid fuel into a tank (1) for stationary applications, said tank (1) comprising a main containment chamber (2) and a sump pit (3) opening on said chamber bottom;
- detecting, through suitable sensor means (4), the possibile presence of water within said sump pit (3);
- sending an alarm signal in case said sensor means (4) detect the presence of water within said sump pit (3).

14. A method according to claim 13, also comprising the step of sucking out the liquid from the sump pit (3) in case said sensor means (4) detect the presence of water within said sump pit (3).

15. A method according to claim 14, wherein said step of sucking out the liquid from the sump pit (3) is stopped when said sensor means (4) do not detect the presence of any more water within the sump pit (3).
